# EUROPEAN PATENT APPLICATION

(11) **EP 2 642 571 A1**
(43) Date of publication of application: **25.09.2013**
(21) Application number: 13001019.2
(22) Date of filing: 28.02.2013
(51) Int. Cl.: H01M 8/02, H01M 8/10

(54) **Fuel cell separator material, fuel cell, and method for manufacturing fuel cell separator material**

(30) Priority: 23.03.2012 JP 2012067718
(71) Applicant: Kabushiki Kaisha Kobe Seiko Sho (Kobe Steel, Ltd.), Kobe-shi, Hyogo 651-8585 (JP)
(72) Inventor: Suzuki, Jun, Kobe-shi, Hyogo, 651-2271 (JP); Sato, Toshiki, Kobe-shi, Hyogo, 651-2271 (JP)
(74) Representative: Müller-Boré & Partner Patentanwälte

(57) **Abstract**

It is an object to provide a fuel cell separator material excellent in electroconductivity and corrosion resistance and capable of excellently adhering to a gasket material by stipulating a novel separator material, a fuel cell, and a method for manufacturing the fuel cell separator material.

In a fuel cell separator material in which a carbon-based electroconductive layer including graphite is formed on the surface of a substrate formed of pure titanium or a titanium alloy, a coating rate of the carbon-based electroconductive layer is 20-70% when a range of 550×400 µm is observed with 200 times observation magnification using an electron microscope.

## Description

### BACKGROUND OF THE INVENTION

### 1. Field of the Invention

The present invention relates to a fuel cell separator material, a fuel cell, and a method for manufacturing the fuel cell separator material, and relates specifically to a fuel cell separator material constituted so as to include a substrate formed of titanium or titanium alloy, a fuel cell, and a method for manufacturing the fuel cell separator material.

### 2. Description of the Related Art

A fuel cell capable of continuously taking out electric power by continuously supplying fuel such as hydrogen and the like and an oxidizing agent such as oxygen and the like has high power generating efficiency unlike a primary battery such as a dry cell and the like and a secondary battery such as a lead storage battery and the like and is not affected much by the magnitude of the scale of the system, noise and vibration are less, and therefore the fuel cell is expected as an energy source covering various uses and scales. More specifically, a fuel cell has been developed as a polymer electrolyte fuel cell (PEFC), an alkaline electrolyte fuel cell (AFC), a phosphoric acid fuel cell (PAFC), a molten carbonate fuel cell (MCFC), a solid oxide fuel cell (SOFC), a biofuel cell and the like. Among them, development of the polymer electrolyte fuel cell has been in progress for a fuel cell automobile, a fuel cell for home use (cogeneration system for home use), a portable device such as a cellular phone, personal computer and the like.

The polymer electrolyte fuel cell (hereinafter referred to as a fuel cell) makes a solid polymer electrolyte membrane sandwiched by an anode electrode and a cathode electrode a unit cell, and is constituted as a stack obtained by stacking the plural unit cells through separators (referred to also as bi-polar plates) formed with grooves that constitute flow passages of gas (hydrogen, oxygen and the like). Also, the fuel cell can increase its output by increasing the number of the cells per stack.

Because the separator for a fuel cell is also a component for taking out the electric current generated to outside the fuel cell, for its material, such characteristics are required that the contact resistance (phenomenon of drop of the voltage between the electrode and the surface of the separator because of an interfacial phenomenon) is low and the state is maintained for a long period of time during use as a separator. Further, because the inside of the fuel cell is of an acidic atmosphere, high corrosion resistance is also required for the separator.

In order to satisfy these requirements, separators obtained by machining a formed product of graphite powder and separators formed of a formed product of a mixture of graphite and resin have been proposed variously. Although these have excellent corrosion resistance, because they are inferior in strength and toughness, they may be broken when vibration and impact are applied. Therefore, separators of metallic material basis have been directed, and have been proposed variously.

Further, although gas (hydrogen, oxygen and the like) and cooling water flow inside the flow passages formed in the separator as described above, in order to prevent the gas and cooling water from leaking to outside, gasket material for sealing is adhered to the surface of the separator in general. Accordingly, in addition to electroconductivity and corrosion resistance, adhesiveness to gasket material is also required for the separator.

With respect to the technology on improvement of the sealing performance (performance of preventing leakage of gas and cooling water), for example, adhesives adhering carbon and a separator material made of metal to gasket material such as fluoro rubber, silicone rubber and the like (Japanese Patent No. 4486801, Japanese Patent No. 4512316) and such material that the gasket material itself has an adhering function (JP-A No. 2003-56704) have been proposed.

However, the technologies related to said Japanese Patent No. 4486801 to JP-A No. 2003-56704 are technologies on adhesives adhering a separator and a gasket material to each other or on a gasket material and are not technologies on the separator itself, and therefore, according to these technologies, sealing performance is greatly affected by the separator used.

That is, there was a room for improving the sealing performance, in other words, a room for improving the adhesiveness of a separator to a gasket material, by creating a novel separator.

Also, in order to improve the electroconductivity and corrosion resistance of a separator at a low cost, technologies of coating a carbon-based electroconductive layer on metallic material were tried, however there was a problem that the carbon-based electroconductive layer was inferior in adhesiveness to adhesives in general and sufficient sealing performance was hard to be secured.

### SUMMARY OF THE INVENTION

The present invention has been developed in view of the problems described above, and its object is to provide a fuel cell separator material excellent in electroconductivity and corrosion resistance and capable of excellently adhering to a gasket material by stipulating a novel separator material, a fuel cell, and a method for manufacturing the fuel cell separator material.

As a result of intensive studies, the present inventors found out that, in the case of a separator material coated by a carbon-based electroconductive layer, in order to excellently adhere to a gasket material, a state that a part of a substrate was exposed was preferable instead that the carbon-based electroconductive layer entirely covered the surface of the substrate, and that, in order to secure both of excellent electroconductivity and corrosion resistance, when a range of 550x400 µm was observed with 200 times observation magnification using an electron microscope, it was preferable to stipulate a coating rate of the carbon-based electroconductive layer to a predetermined range, and the present invention was completed.

That is, the fuel cell separator material in relation with the present invention is a fuel cell separator material in which a carbon-based electroconductive layer including graphite is formed on the surface of a substrate formed of pure titanium or a titanium alloy, in which a coating rate of the carbon-based electroconductive layer is 20-70% when a range of 550×400 µm is observed with 200 times observation magnification using an electron microscope.

Thus, by stipulating the coating rate of the carbon-based electroconductive layer to a predetermined value or more, the fuel cell separator material in relation with the present invention can secure electroconductivity and corrosion resistance required for a separator.

Also, by stipulating the coating rate of the carbon-based electroconductive layer to a predetermined value or less, the fuel cell separator material in relation with the present invention can secure adhesiveness to adhesives.

That is, by stipulating the coating rate of the carbon-based electroconductive layer at a predetermined range, the fuel cell separator material in relation with the present invention can excellently adhere to a gasket material through adhesives in addition to that it is excellent in electroconductivity and corrosion resistance.

Also, in the fuel cell separator material in relation with the present invention, it is preferable that, in an area where the carbon-based electroconductive layer is formed on the surface of the substrate, an intermediate layer including titanium carbide and metallic titanium is formed in an interface between the carbon-based electroconductive layer and the substrate.

Thus, in the fuel cell separator material in relation with the present invention, because the intermediate layer including titanium carbide and metallic titanium is formed in the interface between the carbon-based electroconductive layer and the substrate, the intermediate layer further improves electroconductivity and adhesiveness of the separator material.

Also, the fuel cell separator material in relation with the present invention is preferable to be a fuel cell separator material in which the carbon-based electroconductive layers are formed on both surfaces of the substrate, in which when both surfaces of the separator material are embraced by two sheets of carbon paper and are pressed by a condition of 10 kg/cm² of the contact pressure from outside the carbon paper, the contact resistance to the carbon paper is 10 mΩ·cm² or less.

Thus, in the fuel cell separator material in relation with the present invention, because the contact resistance to the carbon paper is a predetermined value or less when the separator material is pressed under a predetermined condition, the effect of improving electroconductivity can be further ensured.

The fuel cell in relation with the present invention includes the fuel cell separator material and the gasket material stuck to the separator material.

Thus, because the fuel cell in relation with the present invention includes the fuel cell separator material, it can excellently adhere to the gasket material through adhesives in addition that it is excellent in electroconductivity and corrosion resistance.

The method for manufacturing a fuel cell separator material in relation with the present invention is a method for manufacturing the fuel cell separator material including a carbon-based electroconductive layer forming step of coating slurry obtained by dispersing graphite powder, graphite powder and carbon black powder, graphite powder and acetylene black powder, or graphite powder, carbon black powder and acetylene black powder on the surface of the substrate, and a heat treatment step of heating the substrate at 500-850°C under non-oxidizing atmosphere after the carbon-based electroconductive layer forming step.

Thus, because the method for manufacturing a fuel cell separator material in relation with the present invention includes the predetermined carbon-based electroconductive layer forming step and the heat treatment step, a fuel cell separator material excellent in electroconductivity and corrosion resistance and capable of excellently adhering to a gasket material through adhesives can be manufactured.

By stipulating the coating rate of the carbon-based electroconductive layer to the predetermined range, the fuel cell separator material in relation with the present invention is excellent in electroconductivity and corrosion resistance and can excellently adhere to a gasket material through adhesives.

Because the fuel cell separator material is included, the fuel cell in relation with the present invention can maintain stable power generation performance over a long period of time.

Because the method for manufacturing a fuel cell separator material in relation with the present invention includes the predetermined carbon-based electroconductive layer forming step and heat treatment step, a fuel cell separator material that is excellent in electroconductivity and corrosion resistance and can excellently adhere to a gasket material through adhesives can be manufactured.

### BRIEF DESCRIPTION OF THE DRAWINGS

FIG. 1A and FIG. 1B are cross-sectional views showing constitutions of a fuel cell separator material in relation with the present invention.
FIG. 2 is a flowchart explaining steps of a method for manufacturing a fuel cell separator material in relation with the present invention.
FIG. 3 is a schematic view explaining a contact resistance measuring method.
FIG. 4 is a schematic view explaining an adhesiveness evaluating method.
FIG. 5A is a SEM reflected electron image of the surface of a sample No. 4 in relation with an example, and FIG. 5B is a SEM reflected electron image of the surface of a sample No. 6 in relation with an example.
FIG. 6A is an exploded schematic view of a fuel cell in relation with the present invention, and FIG. 6B is an exploded cross-sectional view of a fuel cell in relation with the present invention.

### DETAILED DESCRIPTION OF THE PREFERRED EMBODIMENTS

Below, preferred embodiments of a fuel cell separator material in relation with the present invention will be described in detail.

### {Fuel separator material}

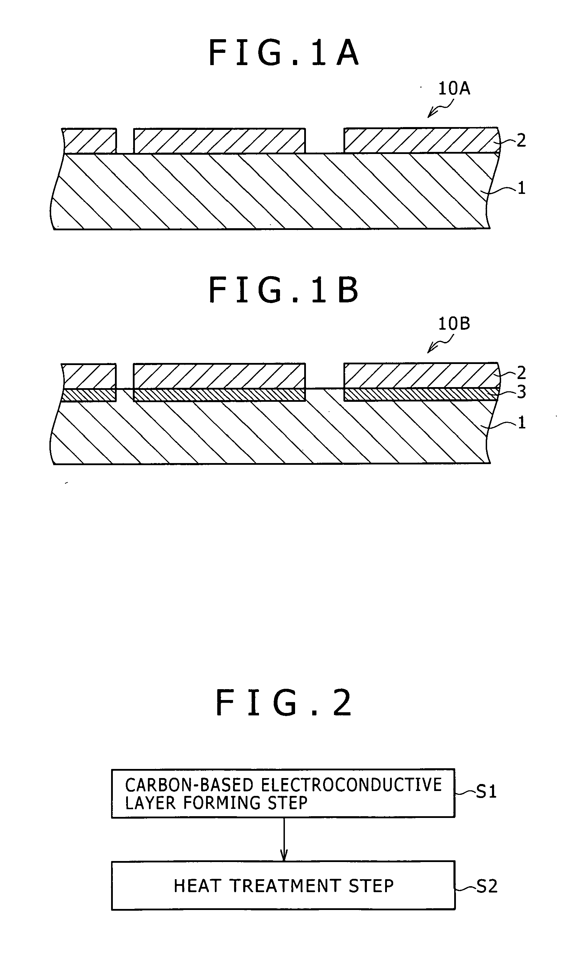

As shown in FIG. 1A, a fuel cell separator material in relation with a preferred embodiment (hereinafter referred to as separator material when appropriate) 10A is constructed of a substrate 1 formed of pure titanium or a titanium alloy and a carbon-based electroconductive layer 2 formed on the surface (one surface or both surfaces) of the substrate 1. Also, it is preferable that, in a separator material 10B, an intermediate layer 3 is formed in an interface between the substrate 1 and the carbon-based electroconductive layer 2 in a region where the carbon-based electroconductive layer 2 is formed on the surface of the substrate 1 as shown in FIG. 1B.

Below, respective elements constructing a separator material 10 will be described in detail.

### <Substrate>

With respect to the substrate 1 of the fuel cell separator material 10, from the viewpoints of workability required for forming grooves that constitute flow passages of gas, gas barrier performance, electroconductivity and thermoconductivity, it is preferable to use a metallic substrate, and particularly, pure titanium and a titanium alloy are highly preferable because they are light in weight, excellent in corrosion resistance, and excellent in strength and toughness also.

The substrate 1 is manufactured by a conventional publicly known method, for example a method of melting and casting pure titanium or a titanium alloy to obtain an ingot, and hot rolling followed by cold rolling. Also, it is preferable that the substrate 1 is subjected to annealing finishing, however the finishing state thereof does not matter, and any finishing state such as "annealing+acid wash finishing", "vacuum heat treatment finishing", "bright annealing finishing" and the like for example is acceptable.

Also, as the substrate 1, one formed of pure titanium or a titanium alloy is preferable instead of one formed of stainless steel. The reason is that, in case of stainless steel, metallic ions of iron, nickel, chromium possibly elute under the oxidizing atmosphere inside the fuel cell, and these eluted metallic ions possibly deteriorate the solid polymer electrolyte membrane. On the other hand, pure titanium or a titanium alloy is highly preferable because a robust passive film is formed under the oxidizing atmosphere inside the fuel cell, and there is no risk of elution of metallic ions.

Although the titanium material is not limited to pure titanium and a titanium alloy of a specific composition, from the viewpoints of easiness in cold rolling of titanium raw material (base metal) (cold rolling of 35% or more total draft can be executed without intermediate annealing) and securing press formability thereafter, preferable is one including O: 1,500 ppm or less (more preferably 1,000 ppm or less), Fe: 1,500 ppm or less (more preferably 1,000 ppm or less), C: 800 ppm or less, N: 300 ppm or less, H: 130 ppm or less, with remainder being Ti and unavoidable impurities. For example, a cold rolled sheet of JIS H 4600 type 1 can be used. Also, because the substrate 1 formed of titanium material is used, the strength and toughness of the fuel cell separator material 10 improve and the substrate 1 itself has high corrosion resistance, and therefore elution of the substrate 1 under the fuel cell environment from a portion not coated by the carbon-based electroconductive layer 2 (a portion where the substrate 1 is exposed) can be prevented. Further, because it is light in weight, it can be easily applied to automobile use in particular.

Also, the sheet thickness of the substrate 1 is preferable to be 0.05-1.0 mm. When the sheet thickness is less than 0.05 mm, the strength required for the substrate 1 cannot be secured. On the other hand, when the sheet thickness exceeds 1.0 mm, fine groove work to form a flow passage of gas described below becomes hard.

### <Carbon-based electroconductive layer>

The carbon-based electroconductive layer 2 is a layer having electroconductivity and corrosion resistance, and is a layer formed on the surface of the separator material 10. Although various carbon materials are used for forming the carbon-based electroconductive layer 2, graphite (graphite powder) is preferable in particular because it is excellent in electroconductivity and corrosion resistance and excellent electroconductivity is maintained even in the oxidizing atmosphere inside the fuel cell.

With respect to the carbon-based electroconductive layer 2 including the graphite, in order to secure electroconductivity and corrosion resistance, it is preferable that the entire area of the surface of the substrate 1 is coated by almost 100%. However, in general, because the carbon-based electroconductive layer 2 is inferior in adhesiveness to adhesives (silicone rubber adhesives and the like) sticking a gasket material, sufficient adhesiveness cannot be secured in a state of approximately 100% of the coating rate. In order to improve adhesiveness to adhesives sticking the gasket material, a state a part of the substrate 1 is exposed is preferable. Accordingly, in order to achieve all of electroconductivity and corrosion resistance as well as adhesiveness to adhesives, it is necessary that a coating rate at which the carbon-based electroconductive layer covers the surface of the substrate 1 is 20-70% when a range of 550×400 µm is observed with 200 times observation magnification using an electron microscope.

Even when the coating rate of the carbon-based electroconductive layer 2 is 20-70% simply, it is preferable that the coating rate in the microscopic region in the field of view observed under a scanning electron microscope of 200 magnifications is 20-70% instead of the coating rate in the macroscopic region of 10 cm square and the like for example.

When the coating rate of the carbon-based electroconductive layer 2 exceeds 70%, although electroconductivity and corrosion resistance improve, adhesiveness to adhesives deteriorates. On the other hand, when the coating rate of the carbon-based electroconductive layer 2 is less than 20%, although adhesiveness to adhesives improves, initial electroconductivity and corrosion resistance deteriorate.

Also, the range of preferable coating rate of the carbon-based electroconductive layer 2 is 25-65%, more preferably 30-60%.

With respect to the separator material 10 in which the coating rate of the carbon-based electroconductive layer 2 is 20-70%, although a form of coating by the carbon-based electroconductive layer 2 is not particularly limited, when the carbon-based electroconductive layer 2 is formed using powder-like material such as graphite powder and the like, the carbon-based electroconductive layer 2 comes to a condition of being distributed on the substrate in such a form of an island shape or of islands tied with each other. Also, when the size of the powder and the coating procedure are selected, a stripe shape or a net shape can be also achieved.

With respect to measurement of the coating rate, first, the surface of the separator material 10 formed with the carbon-based electroconductive layer 2 is observed by a scanning electron microscope with 200 times observation magnification, and the reflected electron image of the field of view is photographed. Also, because the carbon-based electroconductive layer 2 is photographed darker than the substrate in the reflected electron image, binarization is executed in the image analysis so as to discriminate the section of the carbon-based electroconductive layer 2 and the section where the substrate 1 is exposed from each other, the ratio of area occupied by the section of the carbon-based electroconductive layer 2 in the range of 550x400 µm is calculated, and thereby the coating rate can be obtained.

### <Intermediate layer>

The intermediate layer 3 is a layer formed in an interface between the substrate 1 and the carbon-based electroconductive layer 2 in the region where the carbon-based electroconductive layer 2 is formed on the surface of the substrate 1. It is also preferable that the intermediate layer 3 is a layer including titanium carbide formed by reaction of the substrate 1 and the carbon-based electroconductive layer 2 with each other and metallic titanium. The reason is that adhesiveness of the substrate 1 and the carbon-based electroconductive layer 2 to each other improves because titanium carbide has been formed by reaction of the substrate 1 and the carbon-based electroconductive layer 2 with each other in addition to that, because titanium carbide has electroconductivity, the electric resistance in the interface between the substrate 1 and the carbon-based electroconductive layer 2 reduces and the electroconductivity improves.

Further, the intermediate layer 3 is formed by a heat treatment step S2 described below, and more specifically, is formed by diffusion of carbon of the carbon-based electroconductive layer 2 to the substrate 1 side (refer to FIG. 1B).

Whether the intermediate layer 3 includes titanium carbide or not can be confirmed by investigating the interface between the substrate 1 and the carbon-based electroconductive layer 2 using a transmission electron microscope and the like.

### <Contact resistance>

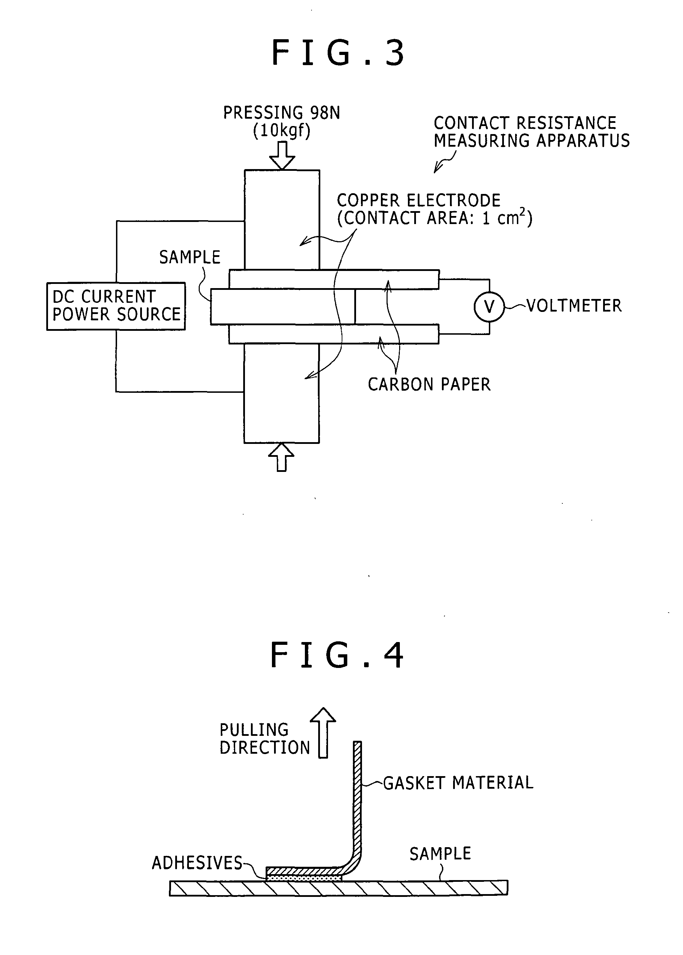

With respect to the fuel cell separator material 10 of the present invention, it is preferable that, in forming the carbon-based electroconductive layers 2 on both surfaces of the substrate 1, contact resistance to the carbon paper is 10 mΩ·cm² or less when both surfaces of the separator material 10 are embraced by two sheets of carbon paper and the separator material 10 is pressed by a condition of 10 kg/cm² of the contact pressure from outside the carbon paper as shown in FIG. 3.

Also, the carbon paper is a belt-like object in which carbon fibers have been weaved in with the thickness of 0.3 mm and the apparent density of 0.5 g/cm³ for example.

Inside the actual fuel cell, the separator material 10 contacts a gas diffusion layer formed of the carbon paper, and is tightened by the pressure of approximately 10 kg/cm².

In such state, when the value of the contact resistance between the separator material 10 and the carbon paper exceeds 10 mΩ·cm², the electric current loss when the separator material 10 is used as the separator inside the fuel cell increases and the performance as the fuel cell drops which is not preferable. Accordingly, the contact resistance between the separator material 10 and the carbon paper is preferable to be 10 mΩ·cm² or less, more preferably 9 mΩ·cm² or less.

Also, in order to increase the value of the contact resistance, the coating rate of the carbon-based electroconductive layer 2 is to be increased, the partial pressure of oxygen in the heat treatment step is to be lowered, and the heat treatment temperature is to be raised.

Next, a fuel cell including a fuel cell separator material will be described.

### {Fuel cell}

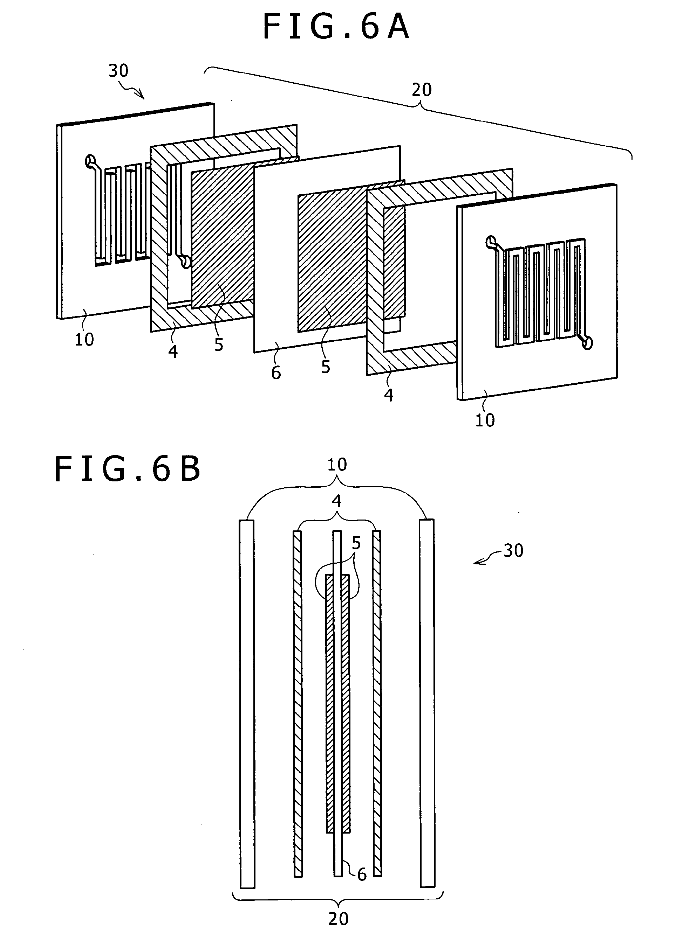

As shown in FIG. 6, a fuel cell 30 in relation with the embodiment includes the fuel cell separator material 10 and a gasket material 4 adhered to the fuel cell separator material 10. Also, this fuel cell separator material 10 is one having been subjected to press working.

Further, the gasket material 4 is a belt-like object preventing gas and cooling water flowing inside flow passages formed in the separator material 10 from leaking to outside and preventing foreign objects from being mixed in from outside, and is a silicone rubber sheet with 0.5 mm thickness for example.

Also, the separator material 10 and the gasket material 4 may be stuck to each other by adhesives (silicone-based seal material and the like).

Further, other construction of the fuel cell 30 can be a conventional publicly known construction.

For example, as shown in FIG. 6, a solid polymer electrolyte membrane 6, carbon paper (gas diffusion layer) 5, 5 arranged on both sides thereof, gasket materials 4, 4 arranged on both sides thereof, and the separator materials 10, 10 arranged on both sides thereof are made a unit cell 20, and the fuel cell 30 is so constructed that one or more of the unit cells 20 are stacked and the stacked unit cells 20 are embraced by two end plates (not shown) from both sides of the stacked unit cells 20.

Next, a method for manufacturing a fuel cell separator material will be described.

### {Method for manufacturing fuel cell separator material}

The method for manufacturing a fuel cell separator material in relation with the embodiment includes a carbon-based electroconductive layer forming step S1 and the heat treatment step S2. Below, the method for manufacturing a fuel cell separator material will be described stepwise.

### <Carbon-based electroconductive layer forming step>

The carbon-based electroconductive layer forming step S1 is a step of forming the carbon-based electroconductive layer 2 on the substrate 1, and is a step of manufacturing electroconductive coating material (slurry) in which the carbon powder is dispersed in a coating material including a binder composition (resin, thickener and the like), and coating the electroconductive coating material on the substrate 1.

With respect to the binder included in the electroconductive coating material, a phenol resin, epoxy resin, polyimide resin and the like of a thermosetting resin are preferable for the resin, and carboxymethylcellulose, carageenan, gellan gum and the like are preferable for the thickener. These binders transform an organic resin composition to inorganic amorphous carbon (diamond-like carbon) by the heat treatment step S2 described below, and bond the carbon powder to the substrate 1.

Also, when an acryl resin-based coating material of a thermoplastic resin is used for the binder, the resin composition is disintegrated by the heat treatment, the carbon-based electroconductive layer 2 becomes extremely brittle, and the carbon powder easily drops from the substrate 1 which is not preferable.

The carbon powder included in the electroconductive coating material is preferable to be any of carbon black powder, acetylene black powder and graphite powder, or mixture powder thereof. Particularly, the carbon powder is preferable to be one including graphite powder, more specifically the graphite powder, graphite powder and carbon black powder, graphite powder and acetylene black powder, or graphite powder, carbon black powder and acetylene black powder.

Such powder is excellent in electroconductivity and corrosion resistance because the graphite composition is included and is a material of a low cost, which is favorable for production.

As the graphite powder, natural graphite powder and artificial graphite powder are used. As examples of the kind of the graphite powder, flake graphite powder, scaly graphite powder, expanded graphite powder, spheroidal graphite powder, pyrolysis graphite powder and the like can be cited, and any of them or mixture of them is used.

The grain size of the carbon powder is preferable to be 50 µm or less. The reason is that, when the grain size exceeds 50 µm, drop and the like of the carbon powder is liable to occur in press working executed for forming grooves that constitute the flow passages on the separator.

On the other hand, although the lower limit value of the grain size is not particularly stipulated, in order to make the carbon-based electroconductive layer 2 be distributed on the substrate 1 in such a form of an island shape or of islands tied with each other, the grain size of the carbon powder is preferable to be as large as over approximately 0.5 µm. However, even if the grain size of the carbon powder is 0.5 µm or less, when such powder that powder easily coagulates with each other to form aggregates such as the acetylene black powder for example is selected and used, the carbon-based electroconductive layer 2 can be distributed on the substrate 1 in such a form of an island shape or of islands tied with each other. However, the grain size of generally used carbon powder is approximately 0.02 µm or more, and one whose grain size is equal to or less than that is hardly available. Even if it is available, it becomes expensive which is not preferable.

With respect to a method for coating electroconductive coating material on the surface of the substrate, preferable is a method for coating electroconductive coating material on the substrate 1 using any of conventional publicly known bar coater, roll coater, reverse roll coater, gravure coater, die coater, kiss coater, rod coater, dip coater, and spray coater.

By using various coaters described above, the slurry can be continuously coated on the surface of the substrate 1 properly, and the productivity can be improved.

With respect to the carbon-based electroconductive layer 2, in order to make the coating rate 20-70% and to make the carbon-based electroconductive layer 2 be distributed on the substrate 1 in such a form of an island shape or of islands tied with each other, the coating condition is to be adjusted by a method of using comparatively large carbon powder as described above, setting the content of the solid matter in the electroconductive coating material to lower side, and executing coating as thin as possible.

Also, when the coating rate of the carbon-based electroconductive layer 2 is to be reduced, the content of the solid matter in the electroconductive coating material is to be reduced, and coating is to be executed comparatively thin. On the other hand, when the coating rate of the carbon-based electroconductive layer 2 is to be increased, the content of the solid matter in the electroconductive coating material is to be increased, and coating is to be executed comparatively thick. In order to control the thickness of the coating, the roll size used is to be properly adjusted in a bar coater, roll coater, gravure coater and the like, and the air amount and the amount of the electroconductive coating material are to be properly adjusted in a spray coater.

### <Heat treatment step>

The heat treatment step S2 is a step of increasing the electroconductivity of the carbon-based electroconductive layer 2 and strengthening bonding of the carbon-based electroconductive layer 2 and the substrate 1 with each other by subjecting the substrate 1 formed with the carbon-based electroconductive layer 2 to heat treatment after the carbon-based electroconductive layer forming step S1.

The heat treatment temperature in the heat treatment step S2 is preferable to be 500-850°C. The reason is that, when the heat treatment temperature is below 500°C, the electroconductivity of the carbon-based electroconductive layer 2 is insufficient and the contact resistance to the carbon paper does not drop sufficiently which is not preferable, whereas when the heat treatment temperature exceeds 850°C, the mechanical properties of the substrate 1 may deteriorate.

Also, the range of the heat treatment temperature is more preferably 520-800°C, further more preferably 550-780°C.

Further, it is preferable that this heat treatment step S2 is executed in the vacuum or under non-oxidizing atmosphere such as Ar gas atmosphere and the like within the temperature range described above. The non-oxidizing atmosphere in the heat treatment means the atmosphere in which the partial pressure of oxygen is low, and is preferable to be the atmosphere with 10 Pa or less of the partial pressure of oxygen. The reason is that, when the partial pressure of oxygen exceeds 10 Pa, carbon in the carbon-based electroconductive layer 2 becomes carbon dioxide by reacting with oxygen in the atmosphere (a combustion reaction occurs), the substrate 1 is oxidized, and thereby the electroconductivity deteriorates.

Also, the time of the heat treatment is preferable to be 0.5-60 min, and the time is to be properly adjusted depending on the temperature in such a manner of treatment for long time when the temperature is low and treatment for short time when the temperature is high.

Further, for this heat treatment, any heating furnace of an electric furnace, gas furnace and the like can be used as far as it is a heat treatment furnace capable of executing heat treatment at the heat treatment temperature of 500-850°C and capable of adjusting the atmosphere.

The method for manufacturing the fuel cell separator material in relation with the present invention may be constituted to include steps other than the carbon-based electroconductive layer forming step S1 and the heat treatment step S2 described above such as, for example, a step of drying the carbon-based electroconductive layer of the separator material (drying step) before the heat treatment step S2, a step of allowing the separator material to cool (cooling step) after the heat treatment step S2, a crimping step described below, a press working step and the like.

Also, when a roll-to-roll process such as winding the separator material into a roll shape once is to be applied after the carbon-based electroconductive layer forming step S1, such a constitution is preferable that the drying step is executed after the carbon-based electroconductive layer forming step S1 and before the heat treatment step S2 in order to avoid the damage and the like of the carbon-based electroconductive layer of the separator material at the time of winding.

### <Crimping step>

A crimping step of pressing the substrate 1 coated with the electroconductive coating material on one surface or on both surfaces with a roll press apparatus, crushing the carbon-based electroconductive layer 2, and crimping (sticking) the carbon powder to the substrate 1 may be executed before the heat treatment step 2.

### <Press working step>

When grooves that constitute flow passages of gas are to be formed by press working, a press working step of forming the separator material into a desired shape by cutting, press working and the like to obtain the fuel cell separator may be executed after the heat treatment step 2.

Further, this press working step can be also executed before the carbon-based electroconductive layer forming step S1, or after the carbon-based electroconductive layer forming step S1 and before the heat treatment step S2. In press working, lubricating oil may be used, but because the carbon-based electroconductive layer 2 on the substrate 1 exerts an action as a lubricant, press working is possible without the lubricating oil, and exfoliation of the carbon-based electroconductive layer 2 does not almost occur even after press working. Therefore, degreasing cleaning after press working is not required, and the productivity of the separator also improves.

The fuel cell separator material 10 manufactured by the method for manufacturing described above is formed with the carbon-based electroconductive layer 2 that is excellent in electroconductivity and corrosion resistance on the surface of the substrate 1, and is excellent also in adhesiveness to the gasket material because the coating rate of the carbon-based electroconductive layer 2 is 20-70%.

Although the embodiments of the present invention were described above, the present invention is not limited to the embodiments, and the design thereof can be changed appropriately within the range not departing from the object of the present invention described in the claims.

### [Examples]

Next, the fuel cell separator material in relation with the present invention will be described specifically comparing examples satisfying the requirement of the present invention and comparative examples not satisfying the requirement of the present invention.

### [Preparation of sample (sample Nos. 1-13)]

For the substrate, a titanium substrate of JIS H 4600 type 1 was used.

The chemical composition of the titanium substrate (annealing-pickling-finished) was O: 450 ppm, Fe: 250 ppm, N: 40 ppm, with the remainder being Ti and unavoidable impurities, the sheet thickness of the titanium substrate was 0.1 mm, and the size was 50×150 mm. The titanium substrate was obtained by subjecting titanium raw material to conventional publicly known melting step, casting step, hot rolling step, and cold rolling step.

Next, a method for forming the carbon-based electroconductive layer will be described, however, because the method for forming the carbon-based electroconductive layer is different according to the sample, the sample Nos. 1-7, the sample Nos. 8, 9, and the sample Nos. 10-13 will be described separately.

### [Formation of carbon-based electroconductive layer (sample Nos. 1-7)]

As the carbon powder, expanded graphite powder (SNE-6G made by SEC CARBON, Ltd., 7 µm average grain size, 99.9% purity) was used, the expanded graphite powder was dispersed in 0.5 wt% carboxylmethyl-cellulose aqueous solution to be 5 wt%, and the electroconductive coating material was prepared. Also, the electroconductive coating material was coated on both surfaces of the titanium substrate using a bar coater with the size of the size No. 1 to the size No. 10, and various coating materials with different coating amount of the carbon powder were prepared.

Also, the coating material was subjected to roll pressing with 2.5 ton load using a two-stage rolling mill with 200 mm work roll diameter, and the carbon powder of the carbon-based electroconductive layer was crushed and was stuck onto the substrate. Further, the lubricating oil was not splayed to the work roll.

Next, the samples formed with the carbon-based electroconductive layer were subjected to heat treatment for 2 min at the temperature of 750°C under the vacuum atmosphere of 6.7×10⁻³ Pa (under the partial pressure of oxygen of 1.3×10⁻³ Pa) or under the Ar gas atmosphere with the oxygen content of 10 ppm (equivalent to the partial pressure of oxygen of 1.0 Pa), and the sample Nos. 1-7 were prepared.

### [Formation of carbon-based electroconductive layer (sample Nos. 8, 9)]

As the carbon powder, expanded graphite powder (SNE-6G made by SEC CARBON, Ltd., 7 µm average grain size, 99.9% purity) and acetylene black powder (made by Strem Chemicals, Inc., 50 nm average grain size, 99.99% purity) were used, the expanded graphite powder and the acetylene black powder were dispersed in 0.5 wt% carboxylmethyl-cellulose aqueous solution to be 3 wt% and 0.5 wt% respectively, and the electroconductive coating material was prepared. Also, the electroconductive coating material was coated on both surfaces of the titanium substrate using the bar coater with the size No. 3 and the size No. 5, and two kinds of coating materials with different coating amount of the carbon powder were prepared.

Also, the two kinds of coating materials were subjected to the roll press treatment and the heat treatment similar to those for the sample Nos. 1-7, and the sample Nos. 8 and 9 were obtained. Further, one prepared using the bar coater with the size No. 3 is the sample No. 8, and one prepared using the bar coater with the size No. 5 is the sample No. 9.

### [Formation of carbon-based electroconductive layer (sample Nos. 10-13)]

As the carbon powder, expanded graphite powder (SNE-6G made by SEC CARBON, Ltd., 7 µm average grain size, 99.9% purity) and acetylene black powder (made by Strem Chemicals, Inc., 50 nm average grain size, 99.99% purity) were used. Phenol resin was used as the binder, the expanded graphite powder and the acetylene black powder were dispersed in the solution obtained by resolving the phenol resin in xylene so that the solid content of the phenol resin became 15 wt% to be 3 wt% and 0.5 wt% respectively, and the electroconductive coating material was prepared. Also, the electroconductive coating material was coated on both surfaces of the titanium substrate using the bar coater with the size No. 3 and the size No. 5, and two kinds of coating materials with different coating amount of the carbon powder were prepared.

Also, the two kinds of coating materials were subjected to the roll press treatment and the heat treatment similar to those for the sample Nos. 1-7, and the sample Nos. 10 and 11 were obtained. Further, one prepared using the bar coater with the size No. 3 is the sample No. 10, and one prepared using the bar coater with the size No. 5 is the sample No. 11.

Also, samples obtained by subjecting the two kinds of coating materials to only the heat treatment similar to that for the sample Nos. 1-7 without subjecting to roll press treatment were also prepared. Further, one prepared using the bar coater with the size No. 3 is the sample No. 12, and one prepared using the bar coater with the size No. 5 is the sample No. 13.

Next, the method for measuring the carbon powder coating amount and the coating rate of the carbon-based electroconductive layer will be described.

### [Measurement of carbon powder coating amount]

The carbon powder coating amount was measured using a sample coated with the slurry in which the carbon powder had been dispersed and subjecting to roll pressing. A part of the sample was cut out, the initial weight was measured, the material was thereafter immersed in water and was subjected to ultrasonic cleaning, and the carbon powder on the surface was removed. After water cleaning and drying, the weight was measured again, the value of the difference from the initial weight was divided by the area, and the coating amount per the area was measured.

Also, with respect to the sample Nos. 10-13, xylene was used instead of water for removing the carbon powder.

### [Measurement of coating rate of carbon-based electroconductive layer]

The range of 550×400 µm of the surface of the sample was observed with 200 times observation magnification using a scanning electron microscope, and the reflected electron image thereof was photographed. Binarization was executed in the image analysis of the reflected electron image so as to discriminate the section where the carbon-based electroconductive layer coated and the section where the carbon-based electroconductive layer did not coat and the substrate was exposed from each other, the ratio of area occupied by the carbon-based electroconductive layer was calculated, and the coating rate was obtained.

Three fields of view were observed per one sample, and the average value of the three fields of view was calculated.

Next, the method of the various evaluation tests and the evaluation criteria will be described.

### [Measurement of contact resistance]

With respect to each sample, the contact resistance was measured using a contact resistance measuring apparatus shown in FIG. 3. More specifically, both surfaces of the sample was embraced by two sheets of carbon paper, the outside thereof was embraced by two sheets of copper electrodes with 1 cm² contact area and was pressed by 10 kgf load, 7.4 mA current was passed using a DC current power source, the voltage applied between the carbon paper was measured by a voltmeter, and the contact resistance (initial contact resistance) was obtained.

The case the initial contact resistance was 10 mΩ·cm² or less was evaluated to be excellent in the electroconductivity, and the case exceeding 10 mΩ·cm² was evaluated to be inferior in the electroconductivity.

### [Evaluation of corrosion resistance]

Also, with respect to the samples whose initial contact resistance was evaluated to have passed, the corrosion resistance (endurance test) was evaluated. That is, the sample was immersed in sulfuric acid aqueous solution (10 m mol/L) of 80°C whose solution volume to sample area ratio was 20 ml/cm², was further subjected to immersion treatment of 100 hours applying +600 mV potential to the sample based on the saturated calomel electrode (SCE), was thereafter taken out from the sulfuric acid aqueous solution, was cleaned and dried, and the contact resistance was measured by a method similar to that described above.

The case the contact resistance after the endurance test (shown as contact resistance after endurance test in Table 1) was 15 mΩ·cm² or less was evaluated to have passed in corrosion resistance, and the case exceeding 15 mΩ·cm² was evaluated to have failed in corrosion resistance.

### [Evaluation of adhesiveness]

A silicone rubber sheet with 0.5 mm thickness was used as the gasket material, and a silicone-based sealant (ThreeBond TB1212) was used as the adhesives. The adhesives were sprayed to a section of approximately 20 mm square of an end of the silicone rubber sheet that had been cut to 20 mm width and 50 mm length, and was stuck to various samples that had been subjected to the heat treatment. After standing for 24 hours or more at room temperature for hardening, the sample was fixed, one end of the silicone rubber sheet was held by hand and was pulled up in the direction orthogonal to the sample, and the exfoliation test was executed (refer to FIG. 4). The case exfoliation occurred in the interface between the adhesives and the electroconductive layer or inside the electroconductive layer was determined to be inferior in adhesiveness, the case exfoliation occurred inside the adhesives and a part of the adhesives remained on the material side or the case exfoliation occurred in the interface between the silicone rubber sheet and the adhesives was determined to be excellent in adhesiveness, and one determined to be excellent was evaluated to have passed.

The carbon powder coating amount, coating rate of the carbon-based electroconductive layer, presence/absence of the intermediate layer, contact resistance of the initial stage and after the endurance test, and the result of evaluation of the adhesiveness to the gasket material of each sample are shown in Table 1.

**[Table 1]**

| Sample No. | Carbon powder coating amount | Coating rate of carbon-based electroconductive layer | Intermediate layer | Contact resistance (mΩ·cm²) | | Adhesiveness evaluation | Remarks |
|---|---|---|---|---|---|---|---|
| | (µg/cm²) | (%) | | Initial | After endurance test | | |
| 1 | 32 | 15 | Present | 8.7 | 17.8 | excellent | Comparative example |
| 2 | 42 | 25 | Present | 6.1 | 12.7 | excellent | Invention example |
| 3 | 55 | 38 | Present | 4.5 | 5.9 | excellent | Invention example |
| 4 | 69 | 55 | Present | 3.2 | 3.9 | excellent | Invention example |
| 5 | 89 | 68 | Present | 2.6 | 3.5 | excellent | Invention example |
| 6 | 110 | 75 | Present | 2.8 | 3.8 | inferior | Comparative example |
| 7 | 152 | 91 | Present | 3.0 | 4.2 | inferior | Comparative example |
| 8 | 38 | 35 | Present | 3.2 | 6.3 | excellent | Invention example |
| 9 | 58 | 60 | Present | 3.0 | 5.2 | excellent | Invention example |
| 10 | 40 | 32 | Present | 4.5 | 7.4 | excellent | Invention example |
| 11 | 59 | 55 | Present | 4.2 | 7.2 | excellent | Invention example |
| 12 | 40 | 25 | Present | 5.3 | 8.0 | excellent | Invention example |
| 13 | 59 | 48 | Present | 5.0 | 7.5 | excellent | Invention example |

The sample Nos. 2-5, 8-13 resulted to have passed in all items of the initial contact resistance, the contact resistance after the endurance test, and evaluation of the adhesiveness because the coating rate of the carbon-based electroconductive layer was within the range stipulated by the present invention.

On the other hand, because the coating rate of the carbon-based electroconductive layer was less than the lower limit value stipulated by the present invention, although the sample No. 1 resulted to have passed in the items of the initial contact resistance and evaluation of the adhesiveness, it resulted to have failed because the contact resistance after the endurance test was large.

Also, because the coating rate of the carbon-based electroconductive layer exceeded the upper limit value stipulated by the present invention, although the sample Nos. 6, 7 resulted to have passed in the items of the contact resistance of the initial stage and after the endurance test, it resulted to have failed in the item of evaluation of the adhesiveness.

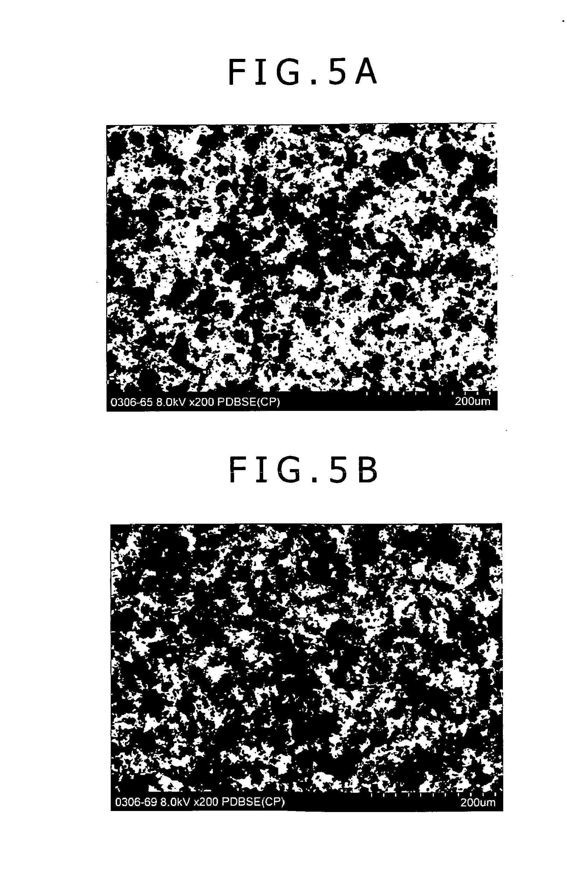

Further, FIG. 5A and FIG. 5B are the results of observing the surface of the sample with 200 times observation magnification using the scanning electron microscope, photographing the reflected electron image, and binarizing the electron image so as to discriminate the section where the carbon-based electroconductive layer coated (the section imaged black) and the section where the carbon-based electroconductive layer did not coat and the substrate was exposed (the section imaged white) from each other by image processing.

Also, FIG. 5A is the result of the sample No. 4, and FIG. 5B is the result of the sample No. 6.

## Claims

1. A fuel cell separator material wherein a carbon-based electroconductive layer including graphite is formed on the surface of a substrate formed of pure titanium or a titanium alloy, wherein
a coating rate of the carbon-based electroconductive layer is 20-70% when a range of 550×400 µm is observed with 200 times observation magnification using an electron microscope.

2. The fuel cell separator material according to claim 1, wherein
in an area where the carbon-based electroconductive layer is formed on the surface of the substrate, an intermediate layer including titanium carbide and metallic titanium is formed in an interface between the carbon-based electroconductive layer and the substrate.

3. The fuel cell separator material according to claim 1 wherein the carbon-based electroconductive layers are formed on both surfaces of the substrate, wherein
when both surfaces of the separator material are embraced by two sheets of carbon paper and are pressed by a condition of 10 kg/cm² of the contact pressure from outside the carbon paper, contact resistance to the carbon paper is 10 mΩ·cm² or less.

4. A fuel cell comprising the fuel cell separator material according to claim 1 and a gasket material stuck to the separator material.

5. A method for manufacturing the fuel cell separator material according to claim 1 comprising:
a carbon-based electroconductive layer forming step of coating slurry obtained by dispersing in which graphite powder, graphite powder and carbon black powder, graphite powder and acetylene black powder, or graphite powder, carbon black powder and acetylene black powder on the surface of the substrate; and
a heat treatment step of heating the substrate at 500-850°C under non-oxidizing atmosphere after the carbon-based electroconductive layer forming step.
